# EUROPÄISCHE PATENTSCHRIFT

(11) **EP 1 114 241 B1**
(45) Veröffentlichungstag und Bekanntmachung des Hinweises auf die Patenterteilung: **14.06.2006**
(21) Anmeldenummer: 00958132.3
(22) Anmeldetag: 14.07.2000
(51) Int. Cl.: F01D 11/02, F16J 15/44

(54) **DICHTRING FÜR NICHT-HERMETISCHE FLUIDDICHTUNGEN**
SEALING RING FOR NON-HERMETIC FLUID SEALS
BAGUE D'ETANCHEITE POUR JOINTS DE FLUIDES NON HERMETIQUES

(30) Priorität: 16.07.1999 DE 19933445
(43) Veröffentlichungstag der Anmeldung: 11.07.2001
(73) Patentinhaber: MTU Aero Engines GmbH, 80995 München (DE)
(72) Erfinder: HOFFELNER, Herbert, D-85229 Markt Indersdorf (DE)
(86) Internationale Anmeldenummer: PCT/DE2000/002309
(87) Internationale Veröffentlichungsnummer: WO 2001/006097

(56) Entgegenhaltungen:
- DE-A- 4 341 216
- US-A- 3 846 899
- US-A- 4 671 735

## Beschreibung

Die Erfindung betrifft einen Dichtring für nicht-hermetische Fluiddichtungen mit einem gedrosselten Durchlaß zwischen koaxialen, relativ zueinander rotierenden Dichtungselemeriten, gemäß dem Oberbegriff des Patentanspruches 1.

Dichtringe dieser Art werden bevorzugt in Labyrinthdichtungen von Gasturbinentriebwerken eingesetzt, um in Zusammenwirkung mit einem koaxialen, meist statischen Einlaufbelag eine strömungstechnische Drosselstelle zu bilden und somit benachbarte, gasbeaufschlagte Räume auf unterschiedlichen Betriebsdrücken zu halten. Dabei ist es üblich, solche Dichtringe mit mehreren, axial hintereinander angeordneten Dichtrippen zu versehen, welche in Fachkreisen-üblicherweise als "Dichtfins" bezeichnet werden. Speziell bei großen Triebwerken treten große Relativbewegungen in Axial- und Radialrichtung zwischen den Dichtfins und dem Einlaufbelag auf, wobei die Dichtfins radial in den Einlaufbelag eindringen und diesen über eine gewisse axiale Länge abtragen. Dieser Einlaufvorgang ist in der Regel nach einer Flugmission weitgehend abgeschlossen, so daß danach die gewünschte, reproduzierbare Dichtwirkung vorliegen sollte. Bei glatten Dichtfins entspricht das Einarbeiten in den Einlaufbelag einem Reibvorgang mit hoher thermischer Belastung der Finspitzen. Daraus können Gefügeveränderungen mit Rißbildung resultieren, schlimmstenfalls kann der Dichtring brechen und das Triebwerk gefährden.
Es sind zahlreiche Maßnahmen bekannt, welche diesem Problem abhelfen sollen und unter den Begriff "Finspitzenpanzerung" fallen.

So schützt die DE 4341 216 C2 ein Dichtungsbauteil für Spalt- oder Labyrinthdichtungen mit einer Beschichtung aus einem Verbund von Metall und Hartstoffpartikeln, wobei letztere in Form regelmäßig geformter Körper mit eingeebneten, auf dem selben Niveau liegenden Oberflächen angeordnet sind. Diese Bauweise soll dazu führen, daß das Einlaufbelagmaterial nicht nur durch Abrasion entfernt wird sondern auch durch heißplastisches Fließen verdrängt wird. Dies setzt aber eine starke Wärmeentwicklung durch Reibung voraus, welche wiederum den Finwerkstoff schädigen kann.

Die DE 197 30 008 C1 schützt eine Panzerung für ein metallisches Triebwerksbauteil, welche sich beim Anstreifen in einen Einlaufbelag einarbeitet, eine Keramikschicht umfaßt und mit Spitzen und dazwischenliegenden Freiräumen zum Austragen von Abriebmaterial profiliert ist, wobei die Profilierung durch Umformen der Oberfläche des Bauteils vor deren Beschichtung ausgebildet ist, bevorzugt durch Rändeln. Somit ist der gesamte Dichtfin nach Art eines Sägeblattes mit einer Vielzahl von gleichmäßig über seinen Umfang verteilten Zähnen ausgeführt, deren Oberflächen keramisch beschichtet sind. Diese Lösung hat u.a. den Nachteil, daß die vielen Freiräume zwischen den Zähnen/Spitzen generell die Dichtwirkung verschlechtern. Infolge der kleinen Materialquerschnitte in den Spitzen und der punktuellen Wärmeeinleitung treten hier lokale Wärmestromdichten auf, welche höher sein können als bei glatten Dichtfins und somit sehr schädlich für das Werkstoffgefüge. Darüber hinaus bilden die V-förmigen, am Fuß scharfkantigen Freiräume spannungserhöhende Kerben, von denen gefährliche Risse ausgehen können. Im Hinblick auf eine effektive Abrasion und somit einen thermisch unkritischen Einlaufvorgang wäre eine gröbere Zahnung vorteilhaft. Dem widerspricht die Forderung nach guter Dichtwirkung, so daß tatsächlich nur eine sehr feine, flache Zahnung verwendbar ist. Insofern ergibt sich auch mit dieser Lösung eher ein Schleifvorgang mit den bereits genannten thermischen Nachteilen.

Angesichts dieser bekannten Lösungen und ihrer Nachteile besteht die Aufgabe der Erfindung darin, einen Dichtring für nicht-hermetische Fluiddichtungen, speziell für Labyrinthdichtungen in Gasturbinentriebwerken, zu gestalten, der einerseits einen schnellen, abrasiven, thermisch und mechanisch problemlosen Einlaufvorgang und andererseits eine gute, reproduzierbare und kalkulierbare Dichtwirkung gewährleistet, in Zusammenwirkung mit einem geeigneten, mechanisch abtragbaren Einlaufbelag.

Diese Aufgabe wird durch die in Anspruch 1 gekennzeichneten Merkmale gelöst, in Verbindung mit den gattungsbildenden Merkmalen in dessen Oberbegriff.

Der erfindungsgemäße Dichtring kombiniert in vorteilhafter Weise die Merkmale einer konventionellen Ausführung mit wenigstens einer glatten rotationssymmetrischen Dichtrippe und einer abrasiven Ausführung, wobei nur an einer oder wenigen, diskreten Stellen der Dichtrippe ein oder wenige Schneidelemente angeordnet sind, welche aus der Dichtrippenkontur hervorstehen. Die Schneidelemente sollen wirklich schneidend bzw. spanend und robust, d.h. mechanisch widerstandsfähig, ausgeführt sein, so daß in kürzester Zeit und ohne große Reibarbeit genügend Belagmaterial abgetragen wird, wobei der gewünschte Spalt zur glatten, dichtenden Kontur der Dichtrippe entsteht.
In der spanenden Fertigung ist ein Verfahren bekannt, welches als "Gewindewirbeln" bezeichnet wird und ein schnell rotierendes, hohles Werkzeug mit einem oder wenigen, nach innen vorstehenden Zähnen benutzt, um ein langsam rotierendes Werkstück zu bearbeiten. Obwohl das Werkzeug und das Werkstück beim Gewindewirbeln nicht koaxial zueinander geführt sind, vermittelt dieses Verfahren doch eine gewisse Vorstellung vom Einlaufvorgang eines erfindungsgemäßen Dichtringes.
In den Unteransprüchen sind bevorzugte Ausgestaltungen der Erfindung gekennzeichnet.

Die Erfindung wird anschließend anhand der Zeichnungen noch näher erläutert. Dabei zeigen in vereinfachter, nicht maßstäblicher Darstellung:
Figur t einen axialen Teilschnitt durch einen Dichtring und einen mit dem Dichtring zusammenwirkenden Einlaufbelag,

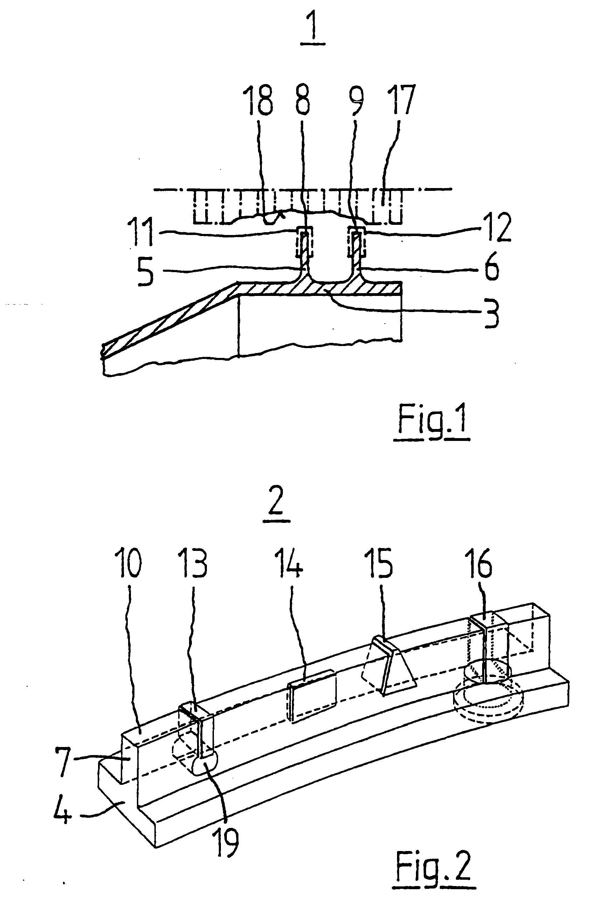

Figur 2 eine perspektivische Teilansicht eines Dichtringes mit verschiedenartigen Schneidelementen.

Der Dichtring 1 gemäß Figur 1 umfaßt einen - zumindest weitgehend - rotationssymmetrischen Träger 3, welcher mit wenigstens einem benachbarten, rotierenden Bauteil (nicht wiedergegeben) fest verbunden ist. Am Träger 3 sind zwei radial nach außen weisende Dichtrippen 5,6 angeordnet, welche über den Großteil ihres Umfangs eine glatte, rotationssymmetrische Kontur aufweisen. Somit sind auch deren freie Kanten 8,9 weitgehend glatt und rotationssymmetrisch, d.h. kreiszylindrisch. Zur Ergänzung sei angemerkt, daß an einem Träger auch nur eine Dichtrippe oder mehr als zwei Dichtrippen angeordnet sein können, daß die freien Kanten mindestens zweier Dichtrippen im Durchmesser gestuft, d.h. verschieden groß sein können, und daß alle oder ein Teil der Dichtrippen auch radial nach innen vom Träger abstehen können.
Die gestrichelten Konturen 11,12, weisen auf Schneidelemente und deren Rotationsbahnen hin. Man erkennt, daß die Schneidelemente 11,12 jeweils radial und beidseitig axial über die Dichtrippenkonturen vorstehen. Dadurch ist sichergestellt, daß die Dichtrippen 5,6 selbst einschließlich ihrer freien, dichtenden Kanten 8,9 praktisch nie mit dem gegenüberliegenden Einlaufbelag 17 in Berührung kommen, so daß auf Maßnahmen wie Oberflächenhärtung, Panzerung etc. in aller Regel verzichtet werden kann.
Der als benachbartes, statisches Dichtungselement gestrichelt dargestellte Einlaufbelag 17 ist - wie in der Praxis häufig - als metallische Honigwabenstruktur ausgeführt, deren Werkstoff relativ problemlos durch spanende Bearbeitung abtragbar sein sollte, d.h. eine gewisse Duktilität sowie ein definiertes Bruchverhalten aufweisen sollte.
Durch radiale und axiale Relativbewegungen zwischen Dichtring 1 und Einlaufbelag 17 mit Überschreitung des radialen Einbauspaltes wird der Einlaufbelag 17 innenseitig bereichsweise abtragen, so daß sich nach einem Vollastzyklus, z.B. einer Flugmission mit Manövern, eine charakteristische Einlaufkontur 18 bildet, welche sich im weiteren Betrieb nicht oder kaum mehr ändert. Die Einlaufkontur 18 entspricht weitgehend einer äußeren Hüllkurve über alle aufgetretenen, relativen Maximalauslenkungen der Schneidelemente 11,12.
Da der Einlaufvorgang nur einen kleinen Teil der Bauteillebensdauer ausmacht, besteht die Möglichkeit, nach dessen Abschluß die Schneidelemente zu entfernen bzw. bis auf Bündigkeit mit der Dichtrippenkontur abzuarbeiten. Entfembare Schneidelemente können durch rippenbündige Austauschteile ersetzt werden. All dies wäre beispielsweise im Rahmen einer ersten Triebwerksüberholung möglich.

Figur 2 zeigt im Detail verschiedene Ausführungen von Schneidelementen 13 bis 16 an einem Dichtring 2 mit einer radial äußeren Dichtrippe 7 auf einem Träger 4, wobei die freie, dichtende Kante 10 nach oben weist. In der Figur links erkennt man ein plattenförmiges Schneidelement 13, welches axial/radial, d.h. quer zur Dichtrippe 7 und durch diese hindurchführend angeordnet ist. Man sieht, daß das Schneidelement 13 radial (nach oben) und beidseitig axial (nach rechts vorne und links hinten) aus der Dichtrippenkontur hervorsteht. Die Schneidengeometrie ist nicht im Detail dargestellt, wobei es dem Fachmann überlassen wird, hier geeignete Winkel, Spanleit- und Spanbrecheinrichtungen vorzusehen. Das Schneidelement 13 wird in aller Regel aus einem härteren Material bestehen als die Dichtrippe 7, vorzugsweise aus Hartmetall, Keramik oder einem hierauf basierenden Materialverbund. In Abhängigkeit vom Material ist eine den Formschluß ergänzende, stoffschlüssige Verbindung, z.B. durch Löten oder Kleben, sinnvoll. Man erkennt weiterhin eine Entlastungsbohrung 19, welche gefährliche Kerbspannungen im Dichtrippenmaterial am Fuße des Schneidelementes 13 verhindern soll. Aus Dichtungsgründen kann die Entlastungsbohrung 19 verschlossen sein, z.B. mit einem Propfen, mit Klebstoff oder Lot.
Das von links zweite Schneidelement 14 ist ebenfalls plattenförmig ausgeführt, seine Anordnung ist jedoch radial und im wesentlichen circumferential auf einer Seite der Dichtrippe 7 in einer taschenartigen Vertiefung. Die einseitige Anordnung erfordert, daß mindestens ein Paar solcher Schneidelemente 14 je Dichtrippe angeordnet werden, wobei sich diese axial gegenüberstehen oder in Umfangsrichtung versetzt sein können.
Das von links dritte Schneidelement 15 unterscheidet sich vom ersten Schneidelement 13 durch seine Keilform, wobei die axial/radiale Anordnung gleich ist. Die Keilform führt zu einer formschlüssigen Fixierung auch in radialer Richtung, so daß eine zuverlässige Absicherung gegen Fliehkräfte gegeben ist. Eine stoffschlüssige Zusatzfixierung ist allenfalls gegen axiales Herauswandern wirksam. Die Keilform bewirkt weiterhin einen "ziehenden" Schnitt der beiden Seitenschneiden. Spannungswirksame Entlastungsgeometrien im Bereich der beiden unteren, durch die Dichtrippe 7 führenden Keilecken können vorhanden sein, sind hier aber nicht dargestellt.
Das rechte Schneidelement 16 weist die Besonderheit einer rein formschlüssigen Befestigung auf. Hierzu ist es im Fußbereich kreiszylindrisch gestuft, im Schneiden-/Kopfbereich rechteckig ausgeführt. Sein Einbau in den Dichtring 2 erfolgt radial von innen durch Stecken. Sicherungsmaßnahmen gegen Herausfallen nach innen können angebracht sein (nicht dargestellt). Ein Schneidelement dieser Art hat zugegebenermaßen den Nachteil, daß es den tragenden Bauteilquerschnitt örtlich relativ stark reduziert, so daß der Träger des Dichtringes stärker dimensioniert werden muß.

## Patentansprüche

1. Dichtring für nicht-hermetische Fluiddichtungen mit einem gedrosselten Durchlass zwischen koaxialen, relativ zueinander rotierenden Dichtungselementen, insbesondere als rotierendes Dichtungselement für Labyrinthdichtungen in Gasturbinentriebwerken, mit einem zu wenigstens einem Bauteil führenden Träger und mit mindestens einer sich radial nach außen oder nach innen und um den gesamten Träger herum erstreckenden Dichtrippe, deren freie, umlaufende Kante im Betrieb mit einem radial gegenüberliegenden Einlaufbelag eine strömungstechnische Drosselstelle bildet, wobei die Dichtrippe über den Großteil ihres Umfangs eine glatte, rotationssymetrische Kontur und zu dem Einlaufbelag hin eine abrasive Geometrie aufweist, **dadurch gekennzeichnet,**
**dass** nur an einer Stelle oder an diskreten Stellen der/jeder Dichtrippe (5,6,7) jeweils ein Schneidelement (11,12,13,14,15,16) in der Weise angeordnet ist, dass jedes Schneidelement (11,12,13,14,15,16) radial und ein- oder beidseitig axial aus der Kontur der Dichtrippe (5,6,7) hervorsteht.

2. Dichtung nach Anspruch 1, **dadurch gekennzeichnet, dass** an einer bis vier Stellen, vorzugsweise an zwei diametralen Stellen , der Dichtrippe (5,6,7) jeweils ein Schneidelement (11,12,13, 15,16) oder ein Paar axial gegenüberstehender Schneidelemente (14) angeordnet ist.

3. Dichtring nach Anspruch 1 oder 2, **dadurch gekennzeichnet, dass** jedes Schneidelement (11,12,13,14,15,16) formschlüssig und/oder stoffschlüssig, z.B. durch Löten oder Kleben, mit der Dichtrippe (5,6,7) verbunden ist.

4. Dichtring nach einem oder mehreren der Ansprüche 1 bis 3, **dadurch gekennzeichnet, dass** jedes Schneidelement (11,12,13,14,15,16) aus Metall, insbesondere Hartmetall, aus keramisch beschichtetem Metall oder aus Keramik besteht.

## Claims

1. Sealing ring for non-hermetic fluid seals with a throttled opening between coaxial sealing elements rotating relative to each other, particularly as a rotating sealing element for labyrinth seals in gas turbine engines, having a carrier leading to at least one component and having at least one sealing rib extending radially outwardly or inwardly and around the entire carrier, the free surrounding edge thereof forming during operation with a radially opposing running-in coating cover a throttle point in the flow, wherein the sealing rib has over the majority of its periphery a smooth, rotation-symmetrical contour and an abrasive geometry towards the running-in coating cover, **characterised in that**
only at one point or at discrete points of the / each sealing rib (5, 6, 7) a cutting element (11, 12, 13, 14, 15, 16) is arranged in such a manner that each cutting element (11, 12, 13, 14, 15, 16) projects radially and on one or both sides axially from the contour of the sealing rib (5, 6, 7).

2. Sealing ring according to claim 1, **characterised in that** a cutting element (11, 12, 13, 15, 16) or a pair of axially opposing cutting elements (14) are disposed at one to four points, preferably at two diametric points, of the sealing rib (5, 6, 7).

3. Sealing ring according to claim 1 or 2, **characterised in that** each cutting element (11, 12, 13, 14 , 15 , 16) is connected to the sealing rib (5, 6, 7) in a shape-locking and / or material-locking way, e.g. through soldering or bonding.

4. Sealing ring according to one or more of the claims 1 to 3, **characterised in that** each cutting element (11, 12, 13, 14, 15, 16) is made of metal, particularly hard metal, ceramically coated metal or ceramics.

## Revendications

1. Bague d'étanchéité pour joints de fluides non hermétiques, comportant un passage étranglé entre éléments d'étanchéité coaxiaux, tournant les uns par rapport aux autres, formant en particulier un élément d'étanchéité rotatif pour joints à labyrinthe dans les mécanismes moteurs de turbines à gaz,
comportant un support menant à au moins un élément de construction, au moins une nervure d'étanchéité s'étendant radialement vers l'extérieur ou vers l'intérieur ainsi qu'autour du support entier, et dont l'arête tournante libre forme au cours du fonctionnement, avec une couche de rodage lui faisant face radialement, un point d'étranglement selon la technique des fluides,
la nervure d'étanchéité présentant, sur une grande partie de son périmètre, un contour uni à symétrie de révolution et, en direction de la couche de rodage, une géométrie abrasive,
**caractérisée en ce qu'**
en un seul point ou en des points discontinus de la (de chaque) nervure d'étanchéité (5,6,7), est disposé à chaque fois un élément de coupe (11,12,13,14,15,16) de telle manière qu'il fasse saillie radialement et axialement d'un côté ou des deux côtés, à partir du contour de la nervure d'étanchéité (5,6,7).

2. Bague d'étanchéité selon la revendication 1,
**caractérisée en ce qu'**
un élément de coupe (11, 12, 13, 15, 16) ou une paire d'éléments de coupe (14) se faisant face axialement est chaque fois disposé en un à quatre points, et de préférence en deux points diamétralement opposés, de la nervure d'étanchéité (5,6,7)

3. Bague d'étanchéité selon la revendication 1 ou 2,
**caractérisée en ce que**
chaque élément de coupe (11,12,13,14,15,16) est assemblé mécaniquement et/ou matériellement (par exemple par brasage ou collage) avec la nervure d'étanchéité (5,6,7).

4. Bague d'étanchéité selon une ou plusieurs des revendications 1 à 3,
**caractérisée en ce que**
chaque élément de coupe (11,12,13,14,15,16) est constitué de métal (en particulier de métal dur), de métal revêtu de céramique ou de céramique.
